# EUROPÄISCHE PATENTSCHRIFT

(11) **EP 1 315 623 B1**
(45) Veröffentlichungstag und Bekanntmachung des Hinweises auf die Patenterteilung: **03.11.2004**
(21) Anmeldenummer: 01957751.9
(22) Anmeldetag: 01.08.2001
(51) Int. Cl.: B60B 33/02

(54) **TRANSPORTROLLE**
CASTER
GALET DE ROULEMENT

(30) Priorität: 08.09.2000 DE 10044370
(43) Veröffentlichungstag der Anmeldung: 04.06.2003
(73) Patentinhaber: Rhombus Rollen GmbH & Co., 42929 Wermelskirchen (DE)
(72) Erfinder: KAUSEMANN, Roland, 42897 Remscheid (DE)
(74) Vertreter: Berkenbrink, Kai-Oliver
(86) Internationale Anmeldenummer: PCT/DE2001/002946
(87) Internationale Veröffentlichungsnummer: WO 2002/020285

(56) Entgegenhaltungen:
- DE-C- 19 504 074
- DE-C- 19 724 577
- DE-U- 9 108 969
- GB-A- 873 107
- PATENT ABSTRACTS OF JAPAN vol. 011, no. 228 (M-610), 24. Juli 1987 (1987-07-24) & JP 62 043304 A (TOSHIBA CORP), 25. Februar 1987 (1987-02-25)

## Beschreibung

Die Erfindung betrifft eine Transportrolle, wie sie zum Beispiel als Bettenrolle, Apparaterolle, Schwerlastrolle oder dergleichen im privaten und gewerblichen Bereich vielfach Anwendung findet. In der Regel ist die Rolle lenkbar. Eine solche Lenkrolle zeigt die DE 197 24 577 C1.

Die bekannte Lenkrolle weist ein Rad auf, welches an einer Aufnahme drehbar geführt ist.

An dieser Aufnahme ist auch ein Bremsschuh angeordnet, der über einen Bolzen der Aufnahme gegen die Lauffläche des Rades gedrückt beziehungsweise von der Lauffläche des Rades wieder gelöst werden kann.

Je nach Materialart und/oder Materialhärte der Rad-Lauffläche sind unterschiedliche Kräfte notwendig, um eine gewünschte Bremswirkung zu erzielen. Mit zunehmendem Verschleiß der Lauffläche verändert sich die Bremsleistung.

Mit der Erfindung soll eine Transportrolle der eingangs genannten Art mit einer alternativen Bremseinrichtung bereitgestellt werden, wobei die Bremseinrichtung insbesondere unabhängig vom Verschleiß des Rades und unabhängig vom Material der Lauffläche des Rades funktionsbereit sein soll.

Die Erfindung betrifft in ihrer allgemeinsten Ausführungsform eine Transportrolle mit folgenden Merkmalen:
- einem Rad, das an einer Aufnahme drehbar geführt ist,
- einem ein- oder mehrteiligen Lagerbock, der
- an der Aufnahme befestigt oder Bestandteil der Aufnahme ist,
- zwei Abschnitte des Lagerbocks verlaufen außerhalb des Rades in dessen Umfangsbereich auf gegenüberliegenden Seiten des Rades,
- jeder Abschnitt weist ein Drehlager auf, auf dem ein Bremsbügel geführt wird,
- die Bremsbügel sind an ihrem oberhalb der Drehlager verlaufenden Ende über eine Feder derart verbunden, daß ein Abstand der Bremsbügel an ihren Enden über eine Änderung der Federlänge zwischen Anlenkstellen der Feder an den Bremsbügeln veränderbar ist.

Auf diese Weise wird eine Transportrolle mit einer Bremseinrichtung zur Verfügung gestellt, die nicht auf die Lauffläche des Rades wirkt, sondern auf Seitenflächen des Rades, insbesondere einen Radsteg, das ist der Abschnitt des Rades, der zwischen der Radnabe und der Rad-Lauffläche verläuft und im wesentlichen die Form einer Scheibe mit Mittenbohrung hat.

Auf diese Weise ist die Bremseinrichtung unabhängig von Art und Material der Lauffläche. Damit ist die Bremseinrichtung auch unabhängig vom Verschleißgrad der Lauffläche.

Ein weiterer Vorteil besteht darin, daß die Bremseinrichtung seitlich auf das Rad wirkt, wo sich üblicherweise weniger Schmutz ansammelt. Der Schmutz wird überwiegend von der Lauffläche aufgenommen und kann bei der hier genannten Transportrolle die Funktionstüchtigkeit der Bremseinrichtung nicht beeinträchtigen.

Ein weiterer wesentlicher Aspekt der Transportrolle ist, daß die zugehörige Bremseinrichtung auch an bestehenden Transportrollen nachgerüstet werden kann.

Dies gilt insbesondere dann, wenn die die Bremsbügel beaufschlagende Feder selbst von einem Bolzen beaufschlagt wird, der zum Beispiel bei der Ausführungsform gemäß DE 197 24 577 C1 bereits vorhanden ist und innerhalb einer Lenkrolle unterschiedliche Funktionen erfüllt.

Nach einer Ausführungsform verläuft der Lagerbock im wesentlichen parallel zur Radachse oder anders ausgedrückt: senkrecht zur Laufrichtung des Rades. Bei einem einteiligen Lagerbock versteht es sich von selbst, daß er das Rad mit Abstand übergreifen muß. Es ist aber ohne weiteres möglich, den Lagerbock zweiteilig zu gestalten. Vorteilhaft ist, wenn beidseits des Rades jeweils Abschnitte des Lagerbocks vorhanden sind, an denen die Bremsbügel angelenkt werden können.

Die Bauform bleibt dann klein. Grundsätzlich können die Drehlager für die Bremsbügel auch neben der Lauffläche des Rades ligen. Die Bügel müssen dann jedoch stark gekrümmt sein. Die Abschnitte des Lagerbocks können auch als vertikale Zapfen Bestandteil der Aufnahme für das Rad sein.

Um eine möglichst große Variabilität bezüglich der Bremsleistung zu erreichen, sieht eine Ausführungsform vor, die Bremsbügel so auszubilden, daß ihre vom Rad weg weisenden Arme, in der Regel also die oberhalb der Drehlager verlaufenden Arme kürzer sind als die gegenüberliegenden Arme. Eine solche Ausführungsform wird in der nachfolgenden Figurenbeschreibung näher erläuert.

Diese zeigt auch, daß die Bremsbügel baugleich, aber spiegelbildlich innerhalb der Bremseinrichtung angeordnet sein können und an ihrem radseitigen (unteren) Ende in Richtung aufeinander abgewinkelt sind.

Auf diese Weise kann der "Bremsweg" reduziert werden, insbesondere bei Rädern mit relativ breiter Lauffläche und lediglich scheibenartigem Radsteg.

Dabei können die für die Bremsung wesentlichen Abschnitte der Bremsbügel mit Bremsbelägen (Reibbelägen) ausgebildet sein.

Während die Drehlager für die Bremsbügel einfache Bolzen sein können, kann die Feder - je nach Anordnung innerhalb der Aufnahme - endseitig auf entsprechende Zapfen der Bremsbügel aufgesteckt oder formschlüssig fixiert werden.

Weitere Merkmale der Erfindung sowie die Funktionsweise der beschriebenen Bremseinrichtung ergeben sich aus den Merkmalen der Unteransprüche sowie den weiteren Anmeldungsteilen, insbesondere der nachfolgenden Figurenbeschreibung.

Dabei wird eine Ausführungsform der Erfindung in verschiedenen Ansichten und Details schematisch dargestellt, und zwar in
- Figur 1:: eine perspektivische Ansicht, teilweise im Aufriß, einer Transportrolle,
- Figur 2:: eine perspektivische Teilansicht des Rades ausschließlich mit zugehöriger Bremseinrichtung,
- Figur 3:: eine perspektivische Einzelansicht der Bremseinrichtung,

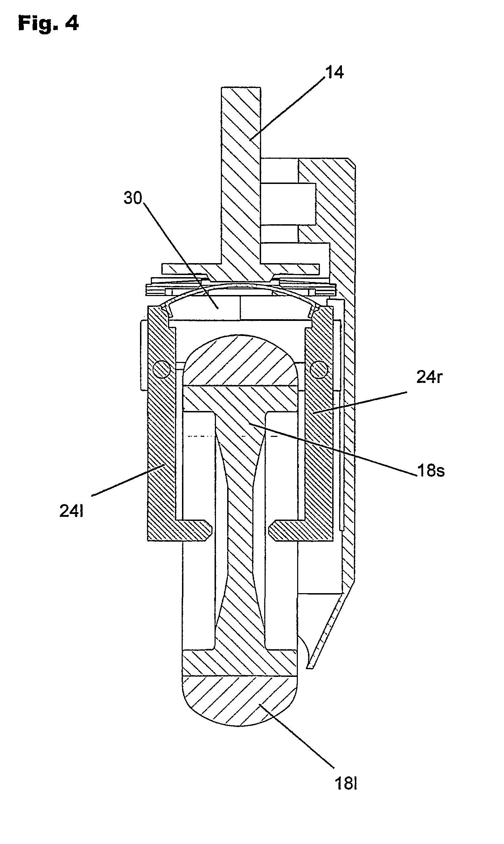

- Figur 4:: einen Teilschnitt durch die Transportrolle gemäß Figur 1 im Bereich ihrer Bremsbügel.

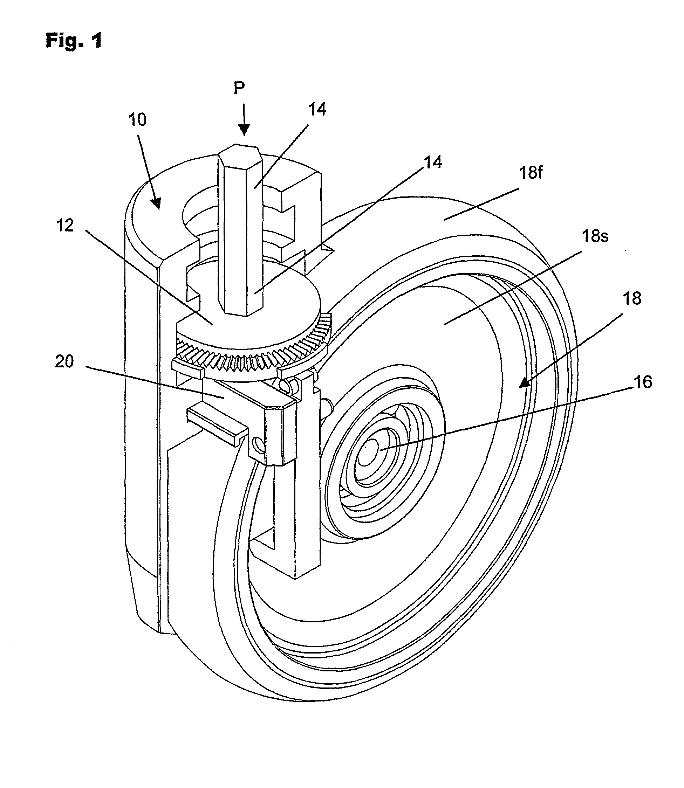

Figur 1 zeigt eine Transportrolle mit einer Aufnahme 10, in der unter anderem ein Zahnkranz 12 geführt ist, der von einem Bolzen (einer Zahnspindel) 14 durchgriffen wird. Bestandteil der Aufnahme 10 ist auch eine Welle 16, auf der ein Lager aufsitzt, welches ein Rad (Laufrad) 18 drehbar führt.

Das Rad 18 besitzt eine Lauffläche 18f, auf die gemäß Stand der Technik (DE 197 24 577 C1) ein Bremsschuh wirkt.

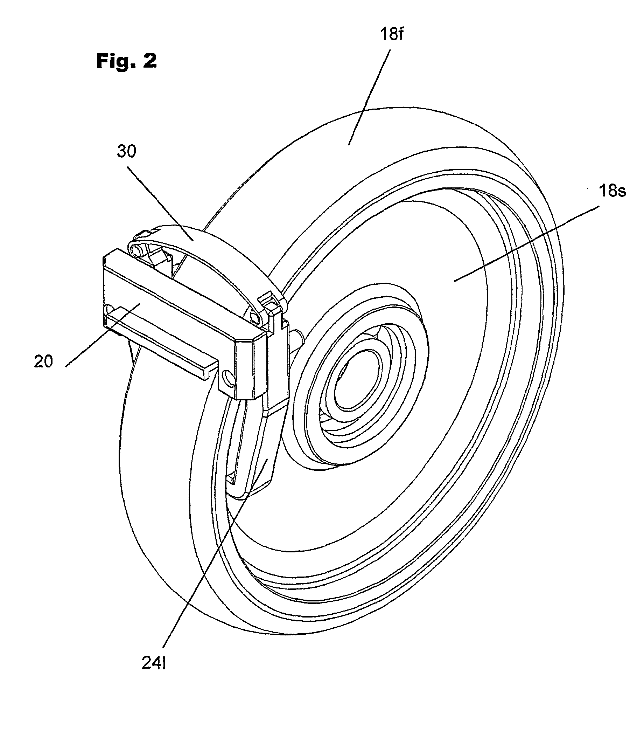

Die erfindungsgemäße Bremseinrichtung umfaßt dagegen einen Lagerbock 20, der an der Aufnahme 10 befestigt ist und sich mit Abstand zur Lauffläche 18f des Rades 18 sowie parallel zur Welle 16 über die Seitenflächen des Rades 18 hinweg erstreckt, wie die Figuren 1, 2 zeigen. Die beiden außerhalb des Rades verlaufenden Abschnitte 20l, 20r des Lagerbocks 20 tragen Bolzen 22, die im wesentlichen horizontal und parallel zu einem die Lauffläche 18f umfangsseitig aufnehmenden Radsteg 18s des Rades 18 verlaufen.

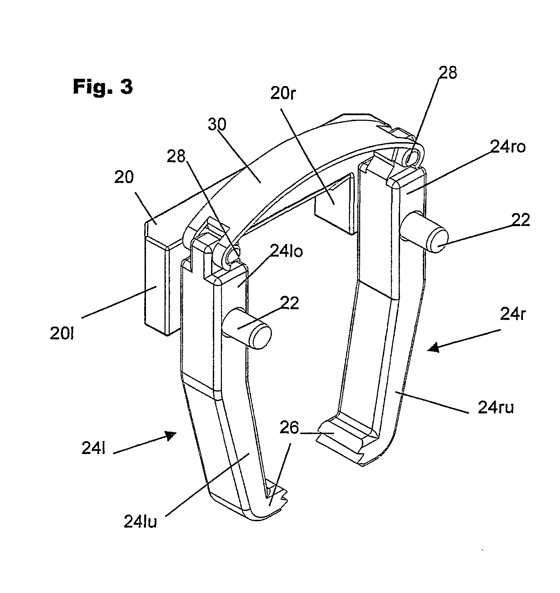

Auf den Bolzen 22 sind Bremsbügel 24l, 24r drehbar geführt. Insbesondere Figur 3 läßt sich entnehmen, daß die Bremsbügel oberhalb der Bolzen (Drehlager) 22 jeweils einen kürzeren Arm 24lo, 24ro als im unteren Teil aufweisen (Arme 24lu, 24ru).

Die Abschnitte 24lu, 24ru sind an ihrem unteren Ende nach innen (aufeinander zu) abgewinkelt und tragen dort Reibbeläge 26.

In der Montageposition, jedoch in ungebremstem Zustand des Rades 18, liegen die Bremsbügel 24l, 24r beziehungsweise ihre Bremsbeläge 26 in geringem Abstand vor dem Radsteg 18s.

Am gegenüberliegenden Ende, also im Bereich der Abschnitte 24lo, 24ro sind die Bremsbügel 24l, 24r verjüngt ausgebildet und nehmen jeweils einen Querstift 28 auf, auf dem jeweils ein umgebogenes Ende einer Blattfeder 30 formschlüssig aufsitzt. Die Blattfeder 30 ist in Bezug auf das Rad 18 konvex gewölbt und so dimensioniert, daß sie im unbelasteten Zustand die Bremsbügel 24l, 24r in einen Abstand hält, der dem zuvor beschriebenen entspricht, bei dem also die Reibbeläge 26 mit Abstand vor den gegenüberliegenden Oberflächen des Radsteges 18s stehen.

Wird die Feder 30 im Betrieb durch den in Figur 1 dargestellten Bolzen (die Zahnspindel) 14 belastet (Pfeilrichtung P in Figur 1), so drückt die Feder 30 die Abschnitte 24lo, 24ro der Bremsbügel 24l, 24r auseinander. Parallel dazu werden die unteren Abschnitte 24lu, 24ru in Richtung aufeinander zu bewegt, wobei sie gegen die Oberflächen des Radsteges 18s geführt werden und das Rad 18 bremsen.

Nach Rückführung des Bolzens 14 wird die Bremsposition der Bremsbügel 24l, 24r wieder gelöst, da die Blattfeder 30 in ihre unbelastete Ausgangsposition nachgeführt wird und dabei die Abschnitte 24lo, 24ro wieder aufeinander zu sowie die Abschnitte 24lu und 24ru wieder voneinander weg bewegt.

## Patentansprüche

1. Transportrolle mit folgenden Merkmalen:
einem Rad (18), das an einer Aufnahme (10) drehbar geführt ist,
einem ein- oder mehrteiligen Lagerbock (20), der an der Aufnahme (10) befestigt oder Bestandteil der Aufnahme ist,
zwei Abschnitte (20l, 20r) des Lagerbocks (20) verlaufen außerhalb des Rades (18) in dessen Umfangsbereich auf gegenüberliegenden Seiten des Rades (18),
jeder Abschnitt (20l, 20r) weist ein Drehlager (22) auf, auf dem ein Bremsbügel (24l, 24r) geführt wird,
die Bremsbügel (24l,24r) sind an ihrem oberhalb der Drehlager (22) verlaufenden Ende (24lo, 24ro) über einer Feder (30) derart verbunden, dass ein Abstand der Bremsbügel (24l, 24r) an ihren Enden (24lo, 24ro; 24lu, 24ru) über eine Änderung der Federlänge zwischen Anlenkstellen der Feder (30) an den Bremsbügeln (24l, 24r) veränderbar ist.

2. Transportrolle nach Anspruch 1, deren Lagerbock (20) im wesentlichen parallel zur Radachse verläuft und das Rad (18) mit Abstand übergreift.

3. Transportrolle nach Anspruch 1, deren oberhalb der Drehlager (22) verlaufende Arme (24lo, 24ro) der Bremsbügel (24l, 24r) kürzer sind als die unterhalb der Drehlager (22) verlaufenden Arme (24ru, 24lu) der Bremsbügel (24l, 24r).

4. Transportrolle nach Anspruch 1, deren Bremsbügel (24l, 24r) baugleich, aber spiegelbildlich am Lagerbock (20) angelenkt sind.

5. Transportrolle nach Anspruch 1, deren Bremsbügel (24l, 24r) an ihrem unterhalb der Drehlager (22) verlaufenden Ende (24lu, 24ru) in Richtung aufeinander zu abgewinkelt sind.

6. Transportrolle nach Anspruch 1, bei der die unterhalb der Drehlager verlaufenden Enden (24lu, 24ru) der Bremsbügel (24l, 24r) mit Bremsbelägen (26) ausgebildet sind.

7. Transportrolle nach Anspruch 1, deren Drehlager (22) aus Bolzen bestehen, deren Achsen parallel zur Radebene verlaufen.

8. Transportrolle nach Anspruch 1, bei der die Feder (30) als Blattfeder gestaltet ist.

9. Transportrolle nach Anspruch 1, bei der die Feder (30) endseitig umgebogen und auf korrespondierenden Lagerstiften (28) aufgesetzt ist.

10. Transportrolle nach Anspruch 1, bei der die Feder (30) von einem Bolzen (14) beaufschlagbar ist.

11. Transportrolle nach Anspruch 10, bei der der Bolzen (14) Bestandteil der das Rad (18) führenden Aufnahme (10) ist.

## Claims

1. A conveyor roller having the following features:
a wheel (18) that is mounted rotatably on a seating position (10),
a bracket (20) consisting of a single or multiple components that is attached to the seating position (10) or is a part of the seating position,
two sections (20l, 20r) of the bracket (20) run beyond the wheel (18) in the circumference thereof on opposing sides of the wheel (18),
each section (20l, 20r) has a pivot bearing (22) on which a braking clip (24l, 24r) is mounted,
the ends (24lo, 24ro) of braking clips (24l, 24r) extending above the pivot bearing (22) are connected via a spring (30) in such manner that a distance between the braking clips (24l, 24r) at the ends (24lo, 24ro, 24lu, 24ru) thereof is modifiable by changing the length of the spring between articulation points of the spring (30) on the braking clips (24l, 24r).

2. The conveyor roller according to claim 1, the bracket (20) of which extends essentially parallel to the wheel axle and encompasses the wheel (18) with a gap therebetween.

3. The conveyor roller according to claim 1, in which the arms (24lo, 24ro) of the braking clips (24l, 24r) that extend above the pivot bearings (22) are shorter than the arms (24ru, 24lu) of the braking clips (24l, 24r) that extend below the pivot bearings (22).

4. The conveyor roller according to claim 1, the braking clips (24l, 24r) of which are of identical construction but articulated mirror-inverted about the bracket (20).

5. The conveyor roller according to claim 1, the braking clips (24l, 24r) of which are angled towards each other at the ends (24lu, 24ru) thereof extending below the pivot bearings (22).

6. The conveyor roller according to claim 1, in which the ends (24lu, 24ru) of the braking clips (24l, 24r) that extend below the pivot bearings are equipped with brake linings (26).

7. The conveyor roller according to claim 1, the pivot bearings (22) of which consist of pins whose axes run parallel to the plane of the wheel.

8. The conveyor roller according to claim 1, in which the spring (30) is configured as a leaf spring.

9. The conveyor roller according to claim 1, in which the end of the spring (30) is bent and supported on corresponding bearing pins (28).

10. The conveyor roller according to claim 1, in which the spring (30) can be placed under tension by a bolt (14).

11. The conveyor roller according to claim 10, in which the bolt (14) is a component of the seating position (10) on which the wheel (18) is mounted.

## Revendications

1. Galet de transport présentant les caractéristiques suivantes :
une roue (18) guidée en rotation dans une cage (10),
un palier (20) d'un seul tenant ou en plusieurs pièces, fixé sur la cage (10) ou faisant partie intégrante de la cage,
deux sections (20l, 20r) du palier (20) s'étendent à l'extérieur de la roue (18), dans l'emprise de la périphérie de celle-ci et sur des côtés opposés de la roue,
chaque section (20l, 20r) présente un pivot (22) sur lequel est guidé un étrier de frein (24l, 24r),
les étriers de frein (24l, 24r) sont reliés, à leurs extrémités (24lo, 24ro) s'étendant au-dessus des pivots (22), par un ressort (30) de sorte qu'une distance entre les étriers de frein (24l, 24r) à leurs extrémités (24lo, 24ro ; 24lu, 24ru) puisse être modifiée par une modification de la longueur du ressort (30) entre les points d'articulation du ressort (30) sur les étriers de frein (24l, 24r).

2. Galet de transport selon la revendication 1, dont le palier (20) s'étend sensiblement parallèlement à l'axe de la roue, et s'étend à distance de part et d'autre de la roue (18).

3. Galet de transport selon la revendication 1, dont les bras (24lo, 24ro) des étriers de frein (24l, 24r) s'étendant au-dessus des pivots (22) sont plus courts que les bras (24lu, 24ru) des étriers de frein (24l, 24r) s'étendant au-dessous des pivots (22).

4. Galet de transport selon la revendication 1, dont les étriers de frein (24l, 24r) sont articulés de la même manière, mais inversés, sur le palier (20).

5. Galet de transport selon la revendication 1, dont les étriers de frein (24l, 24r) sont coudés en direction l'un de l'autre à leurs extrémités (24lu, 24ru) s'étendant au-dessous des pivots (22).

6. Galet de transport selon la revendication 1, sur lequel les extrémités (24lu, 24ru) des étriers de frein (24l, 24r) s'étendant au-dessous des pivots sont formés avec des garnitures de frein (26).

7. Galet de transport selon la revendication 1, dont les pivots (22) sont constitués par des tourillons dont les axes s'étendent parallèlement au plan de la roue.

8. Galet de transport selon la revendication 1, sur lequel le ressort (30) a la forme d'un ressort à lame.

9. Galet de transport selon la revendication 1, sur lequel le ressort (30) est recourbé à ses extrémités et monté sur des axes d'articulation (28) correspondants.

10. Galet de transport selon la revendication 1, sur lequel un effort peut être appliqué sur le ressort (30) par le biais d'un axe (14).

11. Galet de transport selon la revendication 10, sur lequel l'axe (14) fait partie intégrante de la cage (10) qui guide la roue (18).
